# EUROPEAN PATENT APPLICATION

(11) **EP 3 171 258 A1**
(43) Date of publication of application: **24.05.2017**
(21) Application number: 15194959.1
(22) Date of filing: 17.11.2015
(51) Int. Cl.: G06F 3/044, H01Q 1/22

(54) **METAL MESH TOUCH MODULE WITH TRANSPARENT ANTENNA AND TOUCH DISPLAY APPARATUS USING SAME**

(71) Applicant: JTOUCH Corporation, Taoyuan County 32063 (TW)
(72) Inventor: Yeh, Yu-Chou, 32063 Jhongli City, Taoyuan County (TW); Yen, Yu-Hong, 32063 Zhongli Dist., Taoyuan City (TW); Lin, Ting-Ching, 32063 Jhongli City, Taoyuan County (TW); Tsui, Chiu-Cheng, 32063 Jhongli City, Taoyuan County (TW); Chuang, Chia-So, 32063 Zhongli Dist., Taoyuan City (TW)
(74) Representative: 2K Patentanwälte Blasberg Kewitz & Reichel

(57) **Abstract**

A touch display apparatus (4) with a transparent antenna (14) is disclosed. The touch display apparatus (4) including a cover glass (2), a display module (3), and a touch module (1). The touch module (1) is disposed between the cover glass (2) and the display module (3). The touch module (1) includes a transparent substrate (11), a metal mesh touch sensor (12), and an antenna (14). The metal mesh touch sensor (12) is disposed on at least one surface of the transparent substrate (11) and configured to form a viewable area (113), wherein the viewable area (113) comprises at least an overlapping dummy area (153) free of a vertical projection of the metal mesh touch sensor (12). The antenna (14) is disposed on the at least one surface of the transparent substrate (11), and at least portion of the antenna (14) is located in the overlapping dummy area (153), wherein the antenna (14) and the metal mesh touch sensor (12) are insulated from each other.

## Description

### FIELD OF THE INVENTION

The present invention relates a touch module and a touch display apparatus, and more particularly to a metal mesh touch module with a transparent antenna and a touch display apparatus using the same.

### BACKGROUND OF THE INVENTION

Currently, the touch control technology is applied to the display module used in various electronic devices, so that the users can control the electronic devices by means of touch-sensing operations. Generally, a touch display apparatus of electronic device includes a touch module and a display module. The touch module includes a substrate, a plurality of sensing electrodes, and a plurality of metal traces, and the substrate can be divided into a viewable touch-control area and a peripheral area. The sensing electrodes are disposed on the substrate and located in the viewable touch-control area. The metal traces are disposed on the substrate, located in the peripheral area and electrically connected with the corresponding sensing electrodes. The touch module and the display module are adhered with each other, so as to form the touch display apparatus.

In addition, with the advancement of information and communicating technology, electronic devices with touch functionality, such as mobile phones, tablet PCs, portable computers, have become indispensable parts within people's daily life. Generally, electronic device with wireless communication functionality includes an antenna and a wireless signal processing module. The antenna is configured as wireless signal transceiver, and usually disposed on a printed circuit board of the electronic device or an inner surface of case by means of attachment. The electronic devices are tending toward the compact and high-density development. However, the conventional antenna element and the disposition thereof occupy a lot of inner space of the electronic device, the circuit layout thereof is influenced, the entire thickness of the electronic device can't be reduced, and the manufacturing steps and the entire cost for the electronic device will increase. Moreover, the dispositions of the antenna elements are likely to cause signal interference and influence the wireless communicating functionality of the antenna module and the touch functionality of the touch module. Therefore, there is a need of integrating communicating functionality into a touch module to solve problems encountered by the prior art.

### SUMMARY OF THE INVENTION

An object of the present invention provides a touch module with a transparent antenna and a touch display apparatus using the same. The touch module and the touch display apparatus are applicable to electronic device having wireless communicating functionality, without introducing an additional antenna element, so as to decrease the manufacturing steps and the raw materials cost, avoid the signal interference, and accomplish the functionalities of touch control and wireless signal transmission.

Another object of the present invention provides a touch module with a transparent antenna and a touch display apparatus capable of increasing the touch sensitivity, improving a phenomenon of resistance capacitance delay and achieving high optical quality. In addition, the structure is lightweight and compact, the manufacturing process is simplified, and the entire thickness is reduced.

Other object of the present invention provides a touch module with an antenna and a touch display apparatus using the same. The antenna radiator is disposed on a dummy area within the viewable area of the metal mesh touch module, and formed in the same manufacturing step of forming the metal mesh touch sensor disposed on the viewable area and the metal traces disposed on the peripheral area, so as to obtain a uniform thickness. The antenna is transparent and located in viewable area, so that the entire size of the touch module is not influenced and the signal interference is not caused.

In accordance with an aspect of the present invention, there is provided a touch module including a transparent substrate, a metal mesh touch sensor, and an antenna. The metal mesh touch sensor is disposed on at least one surface of the transparent substrate and configured to form a viewable area, wherein the viewable area comprises at least an (one) overlapping dummy area free of a vertical projection of the metal mesh touch sensor. The antenna is disposed on the at least one surface of the transparent substrate, and located in the overlapping dummy area, wherein the antenna and the metal mesh touch sensor are insulated from each other.

In accordance with another aspect of the present invention, there is provided a touch display apparatus including a cover glass, a display module, and a touch module. The touch module is disposed between the cover glass and the display module. The touch module includes a transparent substrate, a metal mesh touch sensor, and an antenna. The metal mesh touch sensor is disposed on at least one surface of the transparent substrate and configured to form a viewable area, wherein the viewable area comprises at least an (one) overlapping dummy area free of a vertical projection of the metal mesh touch sensor. The antenna is disposed on the at least one surface of the transparent substrate, and located in the overlapping dummy area, wherein the antenna and the metal mesh touch sensor are insulated from each other.

The above contents of the present invention will become more readily apparent to those ordinarily skilled in the art after reviewing the following detailed description and accompanying drawings, in which:

### BRIEF DESCRIPTION OF THE DRAWINGS

- FIG. 1A: is a plane view showing a touch module with a transparent antenna according to a first preferred embodiment of the present invention;
- FIGS. 1B: and 1C are exploded perspective views illustrating the touch module with the transparent antenna of FIG. 1A;
- FIG. 2: illustrates the relative arrangement of the metal mesh touch sensor according to a preferred embodiment of the present invention;
- FIG. 3A: is a plane view showing a touch module with a transparent antenna according to a second preferred embodiment of the present invention;
- FIGS. 3B: and 3C are exploded perspective views illustrating the touch module with the transparent antenna of FIG. 3A;
- FIG. 4A: is a plane view showing a touch module with a transparent antenna according to a third preferred embodiment of the present invention;
- FIGS. 4B: and 4C are perspective views illustrating the touch module with the transparent antenna of FIG. 4A in different angle of view;
- FIG. 5A: is a plane view showing a touch module with a transparent antenna according to a fourth preferred embodiment of the present invention;
- FIGS. 5B: and 5C are perspective views illustrating the touch module with the transparent antenna of FIG. 5A in different angle of view;
- FIG. 6A: is a plane view showing a touch module with a transparent antenna according to a fifth preferred embodiment of the present invention;
- FIGS. 6B: and 6C are perspective views illustrating the touch module with the transparent antenna of FIG. 6A in different angle of view;
- FIG. 7: is a plane view showing a touch module with a transparent antenna according to a sixth preferred embodiment of the present invention; and
- FIG. 8: illustrates a touch display apparatus according to the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

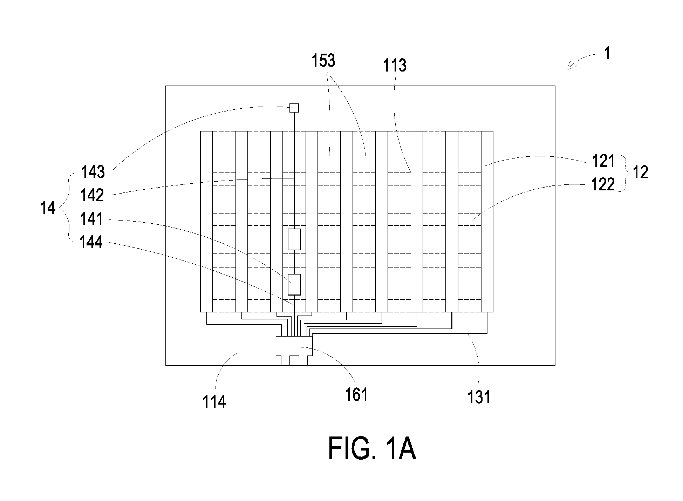

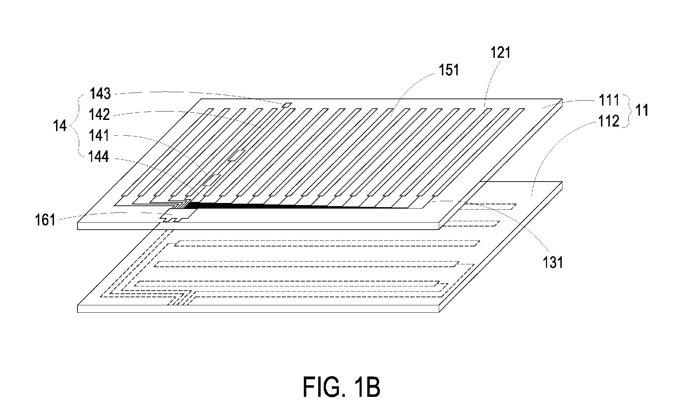

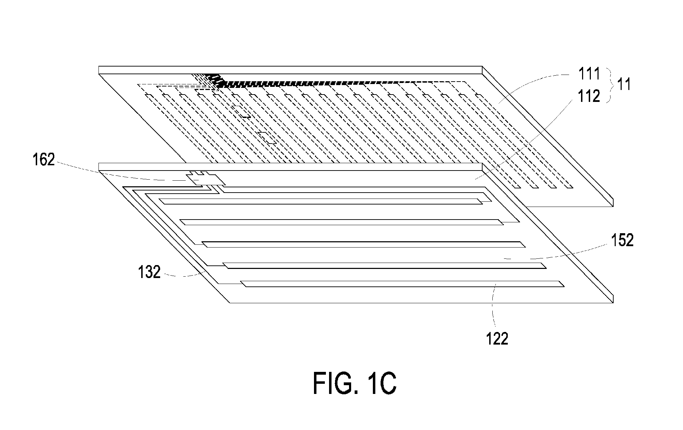

FIG. 1A is a plane view showing a touch module with a transparent antenna according to a first preferred embodiment of the present invention, and FIGS. 1B and 1C are exploded perspective views illustrating the touch module with the transparent antenna of FIG. 1A. As shown in FIGS. 1A to 1C, the touch module 1 can be employed in electronic devices with wireless communicating functionality and touching control functionality, such as but not limited to mobile phones, tablet PCs, portable computers, wearable devices or displays, so as to provide functions of touching control, and transmitting and receiving wireless signals. The touch module 1 includes at least a transparent substrate 11, at least a metal mesh touch sensor 12, and an antenna 14. The metal mesh touch sensor 12 is disposed on at least one surface of the transparent substrate 11 and configured to form a viewable area 113, wherein the viewable area 113 comprises at least an overlapping dummy area 153 free of a vertical projection of the metal mesh touch sensor 12. The antenna 14 is disposed on the at least one surface of the transparent substrate 11, and located in the overlapping dummy area 153, wherein the antenna 14 and the metal mesh touch sensor 12 are insulated from each other. In this embodiment, the transparent substrate 11 comprises a first transparent membrane 111 and a second transparent membrane 112, and the first transparent membrane 111 and the second transparent membrane 112 are adhered by an optical clear adhesive (COA), so as to form the transparent substrate 11. The metal mesh touch sensor 12 comprises a plurality of first sensing electrodes 121 disposed on the top surface of the first transparent membrane 111 and a plurality of second sensing electrodes 122 disposed on the bottom surface of the second transparent membrane 112. The first sensing electrodes 121 and the second sensing electrodes 122 are configured to form a cross arrangement and insulated from each other.

The touch module 1 further comprises a plurality of first metal traces 131 disposed on the top surface of the first transparent membrane 111, configured to form a peripheral area 114 around the viewable area 113, electrically connected with the first sensing electrodes 121, and integrated to connect to a first connecting area 161. Similarly, the touch module 1 further comprises a plurality of second metal traces 132 disposed on the bottom surface of the second transparent membrane 112, located in the peripheral area 114, electrically connected with the second sensing electrodes 122, and integrated to connect to a second connecting area 162. In this embodiment, the viewable area 113 of the touch module 1 comprises at least a first dummy area 151 free of a vertical projection of the first sensing electrodes 121, and at least a second dummy area 152 free of a vertical projection of the second electrodes 122. In other words, any two first sensing electrodes 121 are configured to form a first dummy area 151 on the top surface of the first transparent membrane 111, and any two second sensing electrode 122 are configured to form a second dummy area 152 on the bottom surface of the second transparent membrane 112. The first dummy area 151 and the second dummy area 152 are configured to define the overlapping dummy area 153 free of a vertical projection of the first sensing electrodes 121 and the second sensing electrodes 122 of the metal mesh touch sensor 12. The antenna 14 comprises an antenna radiator 141 disposed on the first dummy area 151, insulated from the first electrodes 121 and located in the overlapping dummy area 153. The antenna radiator 141 is made by fine-wire metal mesh and is transparent. In this embodiment, the antenna 14 further comprises a first connecting trace 142 and a feeder pad 143, wherein the first connecting trace 142 is configured to feed signals and electrically connected between the antenna radiator 141 located in the viewable area 113 and the feeder pad 143 located in the peripheral area 114, so as to transmit and receive wireless signals. Moreover, the antenna 14 further comprises a second connecting trace 144 connected between the antenna radiator 141 and ground of the first connecting area 161.

Please refer to FIG. 1B. In some embodiments, the antenna 14, the first metal traces 131 and the first sensing electrodes 121 of the metal mesh touch sensor 12 are one-step formed by the same manufacturing process on the same surface (i.e. the top surface of the first transparent membrane 111). The above manufacture process is described as following detailedly. Firstly, the first transparent membrane 111 is provided. Secondly, a metal conductive layer is formed on the top surface of the first transparent membrane 111. A photolithography process is performed and a specific pattern is transformed to the metal conductive layer. Then partial metal conductive layer is removed by an etching process and a specific pattern is formed, so as to form the first sensing electrodes 121, the first metal traces 131 and the antenna 14. It is noted that the antenna 14, the first metal traces 131 and the first sensing electrodes 121 of the metal mesh touch sensor 12 can be simultaneously formed in one step on the same surface of the first transparent membrane 111 by but not limited to the above manufacturing process. Other suitable manufacturing process and step are considerable to be employed. Alternatively, the antenna 14, the first metal trace 131, and the first sensing electrodes 121 of the metal mesh touch sensor 12 can be simultaneously formed in one step on the bottom surface of the first transparent membrane 111 by the same manufacturing process, which is similar to the above embodiments, and is not redundantly described herein.

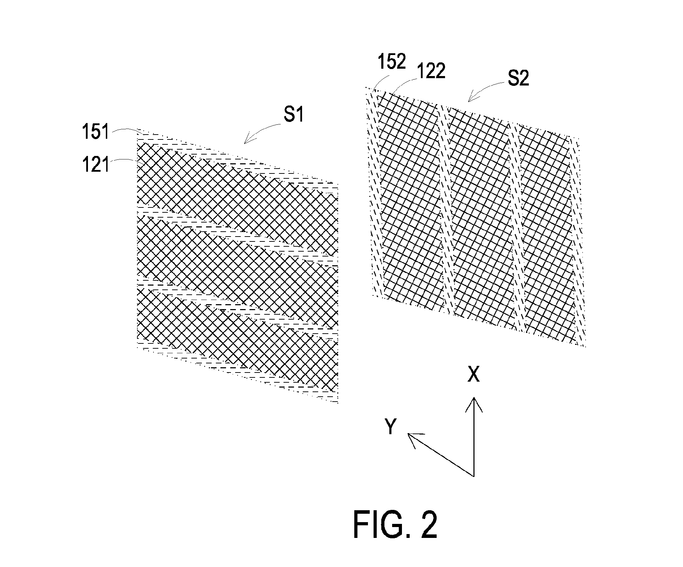

In the above embodiments, the first sensing electrodes 121 and the second sensing electrodes 122 are disposed on different surfaces of the transparent substrate 11. For obtaining the overlapping dummy area 153, the first sensing electrodes 121 and the second sensing electrodes 122 are configured to form a cross arrangement and insulated from each other. FIG. 2 illustrates the relative arrangement between the first sensing electrodes 121 and the second electrodes 122. As shown in FIG. 2, the metal mesh touch sensor 12 has the first sensing electrodes 121 disposed on one surface S1, and the second sensing electrodes 122 disposed on another surface S2. Any two first sensing electrodes 121 are configured to form the first dummy area 151, and any two second sensing electrodes 122 are configured to form a second dummy area 152. Consequently, the first dummy area 151 and the second dummy area 152 are configured to define the overlapping dummy area 153 free of a vertical projection of the first sensing electrodes 121 and the second sensing electrodes 122 of the metal mesh touch sensor 12. It is noted that the overlapping dummy area 153 is obtained by but not limited to the above regular cross arrangement of the first sensing electrodes 121 and the second electrodes 122.

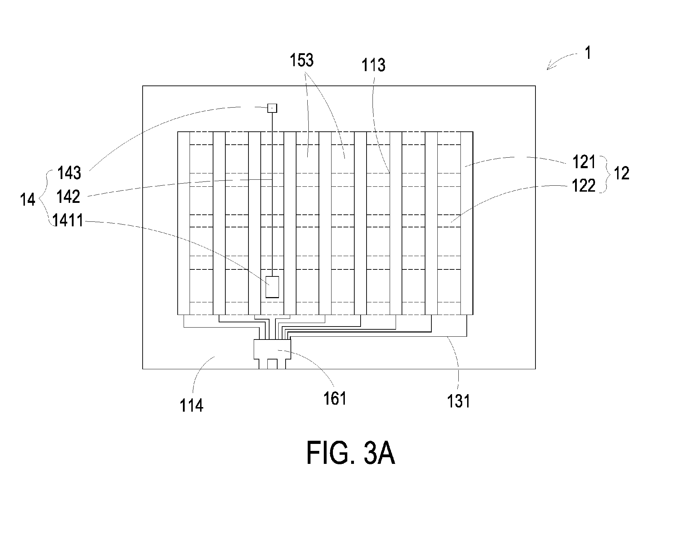

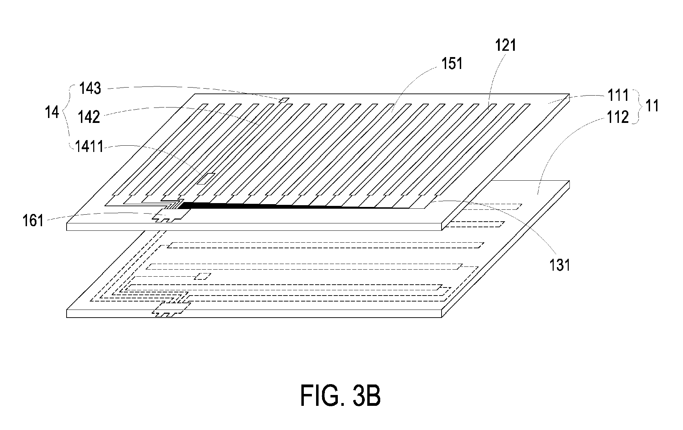

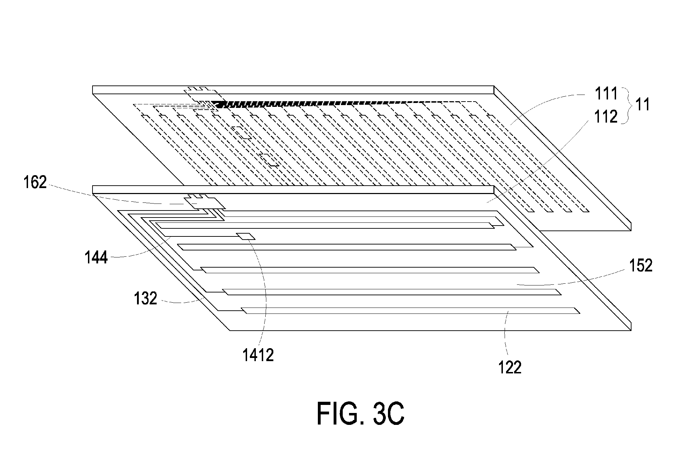

FIG. 3A is a plane view showing a touch module with a transparent antenna according to a second preferred embodiment of the present invention, and FIGS. 3B and 3C are exploded perspective views illustrating the touch module with the transparent antenna of FIG. 3A. As shown in FIGS. 3A to 3C, the structures of the touch module 1 are similar to those of the touch module as shown in FIGS. 1A to 1C, and are not redundantly described herein. Component parts and elements corresponding to those of the FIGS. 1A to 1C are designated by identical numeral references, and detailed descriptions thereof are omitted. Comparing with the touch module 1 of FIGS.1A to 1C, the antenna 14 is a coupling-feed antenna and further comprises at least a first antenna radiator 1411 disposed on the top surface of the first transparent membrane 111, and at least a second antenna radiator 1412 disposed on the bottom surface of the second transparent membrane 112 and signal coupling with the first antenna radiator 1411. In this embodiment, any two first sensing electrodes 121 are configured to form a first dummy area 151 on the top surface of the first transparent membrane 111, and any two second sensing electrodes 122 are configured to form a second dummy area 152 on the bottom surface of the second transparent membrane 112. The first antenna radiator 1411 disposed on the first dummy area 151 and the second antenna radiator 1412 disposed on the second dummy area 152 are located in the overlapping dummy area 153. The first antenna radiator 1411 and the second antenna radiator 1412 are transparent and made by a fine-wire metal mesh structure. The antenna 14 further comprises a first connecting trace 142 and a feeder pad 143, wherein the first connecting trace 142 is electrically connected between the first antenna radiator 1411 located in the viewable area 113 and the feeder pad 143 located in the peripheral area 114, so as to transmit and receive wireless signals. The antenna 14 further comprises a second connecting trace 144 connected between the second antenna radiator 1412 located in the viewable area 113 and ground of the second connecting area 162 located in the peripheral area 114. In this embodiment, the first antenna radiator 1411, the first connecting trace 142 and the feeder pad 143 of the antenna 14, the first metal traces 131 and the first sensing electrodes 121 of the metal mesh touch sensor 12 are one-step formed by the same manufacturing process on the same surface, i.e. the top surface of the first transparent membrane 111. Similarly, the second antenna radiator 1412 and the second connecting trace 144 of the antenna 14, the second metal trace 132, and the second sensing electrodes 122 of the metal mesh touch sensor 12 are one-step formed by the same manufacturing process on the same surface, i.e. the bottom surface of the second transparent membrane 112. Alternatively, the first antenna radiator 1411, the first connecting trace 142 and the feeder pad 143 of the antenna 14, the first metal traces 131 and the first sensing electrodes 121 of the metal mesh touch sensor 12 can be simultaneously formed in one step on the bottom surface of the first transparent membrane 111 by the same manufacturing process, which is similar to the above embodiments, and is not redundantly described herein.

In some embodiments, each of the first transparent membrane 111 and the second transparent membrane 112 is made of the material selected from the group consisting of polyethylene terephthalate (PET), polyetherimide (PEI), polyphenylensulfon (PPSU), polyimide (PI), polyethylene naphthalate (PEN), cyclic olefin copolymer (COC), liquid crystal polymer (LCP) and the combined materials thereof. The metal mesh touch sensor 12 is made of the metal conductive material selected from the group consisting of copper, gold, silver, aluminum, tungsten, iron, nickel, chromium, titanium, molybdenum, indium, tin or alloy with at least two metals thereof.

In some embodiment, the widths of the fine wire of the first antenna radiator 1411 and the second antenna radiator 1412 of the antenna 14, the first sensing electrodes 121 and the second sensing electrodes 122 of the metal mesh touch sensor 12 lie in a range from 1 µm to 10 µm, and are preferably ranged from 2 µm to 7µm. The thicknesses of the fine wire of the first antenna radiator 1411 and the second antenna radiator 1412 of the antenna 14, the first sensing electrodes 121 and the second sensing electrodes 122 of the metal mesh touch sensor 12 lie in a range from 0.3µm to 7 µm, and are preferably ranged from 0.4µm to 5 µm. In some embodiments, the wire thicknesses of the second antenna radiator 1412 of the antenna 14, the first sensing electrodes 121 and the second sensing electrodes 122 of the metal mesh touch sensor 12 are essentially equal to that of the first antenna radiator 1411.

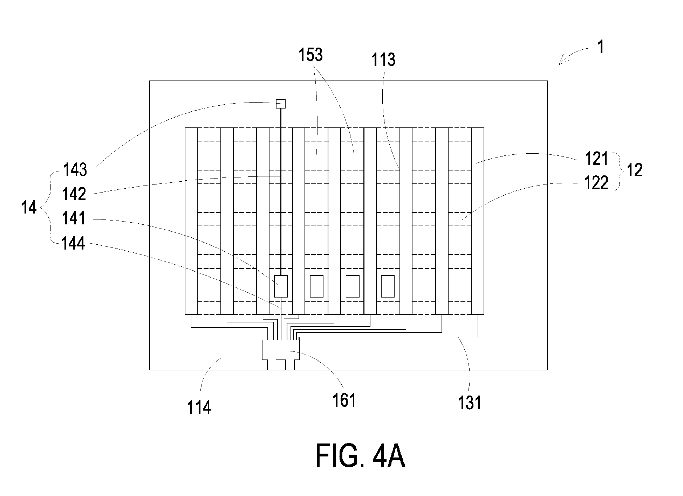

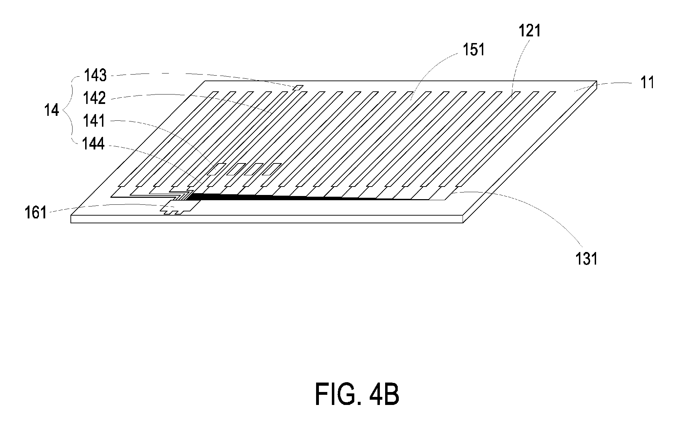

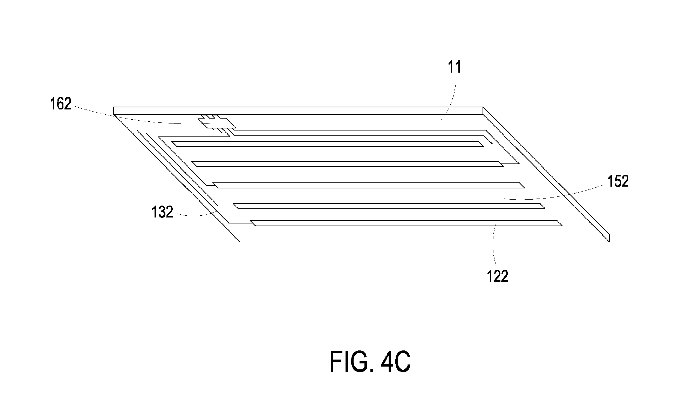

FIG. 4A is a plane view showing a touch module with a transparent antenna according to a third preferred embodiment of the present invention, and FIGS. 4B and 4C are perspective views illustrating the touch module with the transparent antenna of FIG. 4A in different angle of view. As shown in FIGS. 4A to 4C, the touch module 1 includes a transparent substrate 11, a metal mesh touch sensor 12, and an antenna 14. The metal mesh touch sensor 12 comprises a plurality of first sensing electrodes 121 disposed on the top surface of the transparent substrate 11 and a plurality of second sensing electrodes 122 disposed on the bottom surface of the transparent substrate 11. The first sensing electrodes 121 and the second sensing electrodes 122 are configured to form a cross arrangement and a viewable area 113 and insulated from each other. In this embodiment, the viewable area 113 of the touch module 1 comprises at least a first dummy area 151 free of a vertical projection of the first sensing electrodes 121, and at least a second dummy area 152 free of a vertical projection of the second sensing electrodes 122. In other words, any two first sensing electrodes 121 are configured to form a first dummy area 151 on the top surface of the transparent substrate 11, and any two second sensing electrodes 122 are configured to form a second dummy area 152 on the bottom surface of the transparent substrate 11. The first dummy area 151 and the second dummy area 152 are configured to define an overlapping dummy area 153 free of a vertical projection of the first sensing electrodes 121 and the second sensing electrodes 122 of the metal mesh touch sensor 12. The antenna 14 includes an antenna radiator 141, a first connecting trace 142, a feeder pad 143 and a second connecting trace 144. The antenna radiator 141 is transparent, disposed on the top surface of the transparent substrate 11 and located in the overlapping dummy area 153. The first connecting trace 142 is electrically connected between the antenna radiator 141 located in the viewable area 113 and the feeder pad 143 located in the peripheral area 114, so as to transmit and receive wireless signals. The second connecting trace 144 is connected between the antenna radiator 141 and ground of the first connecting area 161.

In some embodiments, the antenna 14, the first metal traces 131 and the first sensing electrodes 121 of the metal mesh touch sensor 12 are one-step formed by the same manufacturing process on the same surface (i.e. the top surface of the transparent substrate 11). It is noted that the antenna 14, the first metal traces 131 and the first sensing electrodes 121 of the metal mesh touch sensor 12 can be simultaneously formed in one step on the same surface of the transparent substrate 11 by but not limited to the above manufacturing process. Other suitable manufacturing process and step are considerable to be employed.

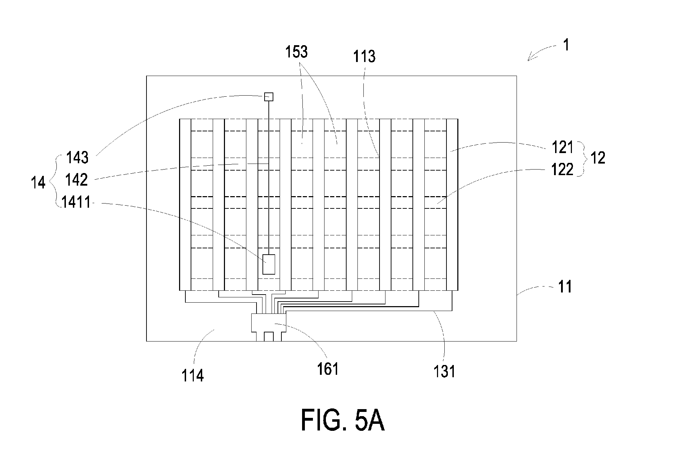

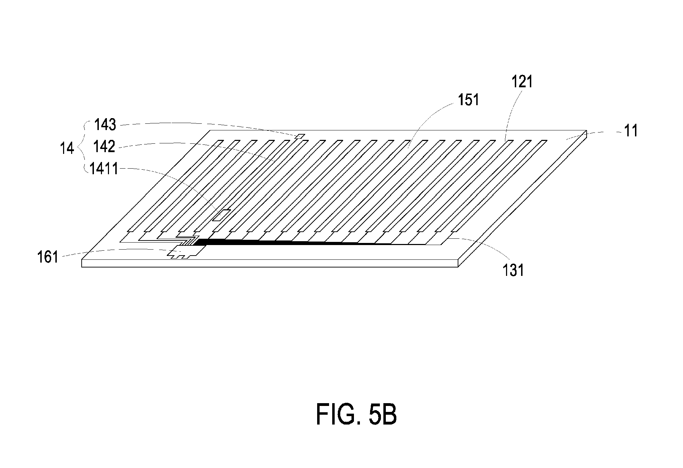

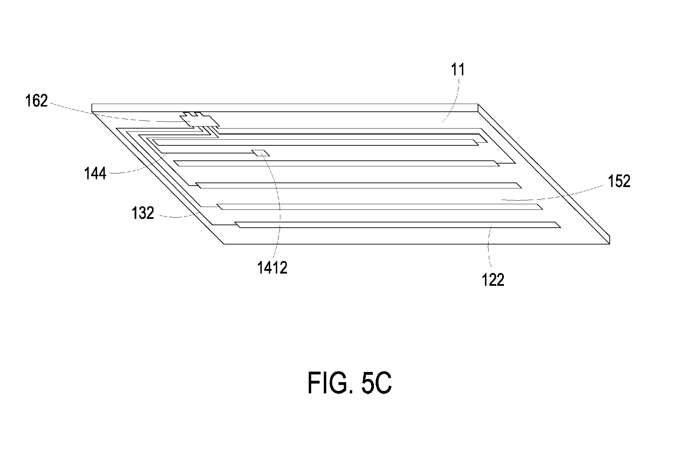

FIG. 5A is a plane view showing a touch module with a transparent antenna according to a fourth preferred embodiment of the present invention, and FIGS. 5B and 5C are perspective views illustrating the touch module with the transparent antenna of FIG. 5A in different angle of view. As shown in FIGS. 5A to 5C, the structures of the touch module 1 are similar to those of the touch module as shown in FIGS. 4A to 4C, and are not redundantly described herein. Component parts and elements corresponding to those of the FIGS. 4A to 4C are designated by identical numeral references, and detailed descriptions thereof are omitted. Comparing with the touch module 1 of FIGS.4A to 4C, the antenna 14 of FIGS. 5A to 5C is a coupling-feed antenna and further comprises a first antenna radiator 1411 disposed on the top surface of the transparent substrate 11, and a second antenna radiator 1412 disposed on the bottom surface of the transparent substrate 11 and signal coupling with the first antenna radiator 1411. In this embodiment, any two first sensing electrodes 121 are configured to form a first dummy area 151 on the top surface of the transparent substrate 11, and any two second sensing electrodes 122 are configured to form a second dummy area 152 on the bottom surface of the transparent substrate 11. The first antenna radiator 1411 disposed on the first dummy area 151 and the second antenna radiator 1412 disposed on the second dummy area 152 are located in the overlapping dummy area 153. The first antenna radiator 1411 and the second antenna radiator 1412 are transparent and made by a fine-wire metal mesh structure. The antenna 14 further comprises a first connecting trace 142 and a feeder pad 143, wherein the first connecting trace 142 is electrically connected between the first antenna radiator 1411 located in the viewable area 113 and the feeder pad 143 located in the peripheral area 114, so as to transmit and receive wireless signals. The antenna 14 further comprises a second connecting trace 144 connected between the second antenna radiator 1412 located in the viewable area 113 and ground of the second connecting area 162 located in the peripheral area 114. In this embodiment, the first antenna radiator 1411, the first connecting trace 142 and the feeder pad 143 of the antenna 14, the first metal traces 131 and the first sensing electrodes 121 of the metal mesh touch sensor 12 are one-step formed by the same manufacturing process on the same surface, i.e. the top surface of the transparent substrate 11. Similarly, the second antenna radiator 1412 and the second connecting trace 144 of the antenna 14, the second metal trace 132, and the second sensing electrodes 122 of the metal mesh touch sensor 12 are one-step formed by the same manufacturing process on the same surface, i.e. the bottom surface of the transparent substrate 11. Accordingly, the present invention provides a touch module with transparent antenna.

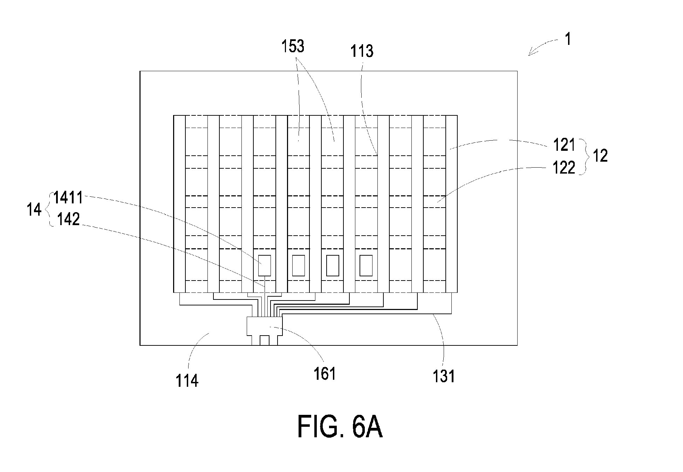

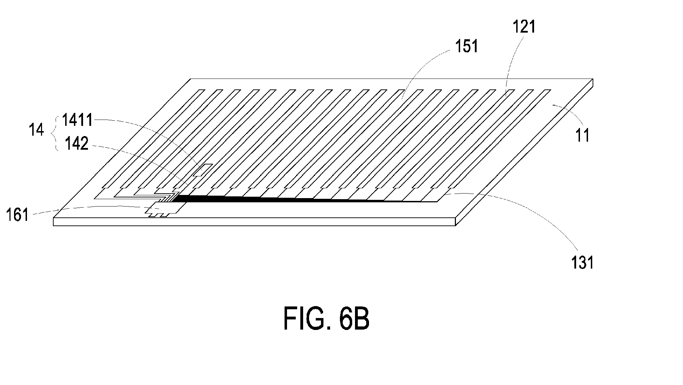

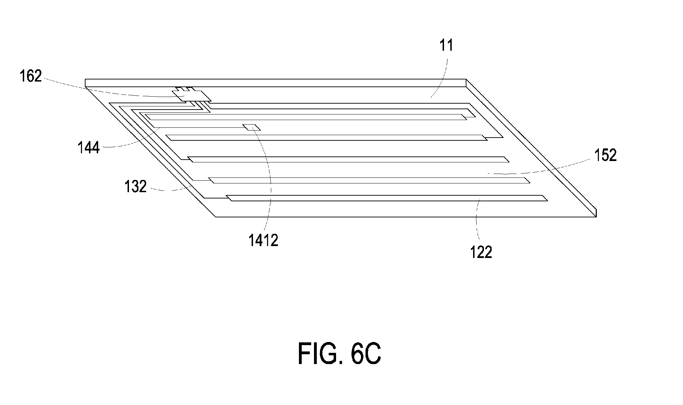

FIG. 6A is a plane view showing a touch module with a transparent antenna according to a fifth preferred embodiment of the present invention, and FIGS. 6B and 6C are perspective views illustrating the touch module with the transparent antenna of FIG. 6A in different angle of view. As shown in FIGS. 6A to 6C, the structures of the touch module 1 are similar to those of the touch module as shown in FIGS. 5A to 5C, and are not redundantly described herein. Component parts and elements corresponding to those of the FIGS. 5A to 5C are designated by identical numeral references, and detailed descriptions thereof are omitted. The antenna 14 of FIGS. 6A to 6C is a coupling-feed antenna, too. Comparing with the touch module 1 of FIGS.5A to 5C, the antenna 14 of FIGS. 6A to 6C comprises a first connecting trace 142, wherein the first connecting trace 142 is electrically connected between the first antenna radiator 1411 located in the viewable area 113 and the first connecting area 161 located in the peripheral area 114, so as to transmit and receive wireless signals. Similarly, the antenna 14 further comprises a second connecting trace 144 connected between the second antenna radiator 1412 located in the viewable area 113 and ground of the second connecting area 162 located in the peripheral area 114. Accordingly, the present invention provides a touch module with transparent coupling-feed antenna.

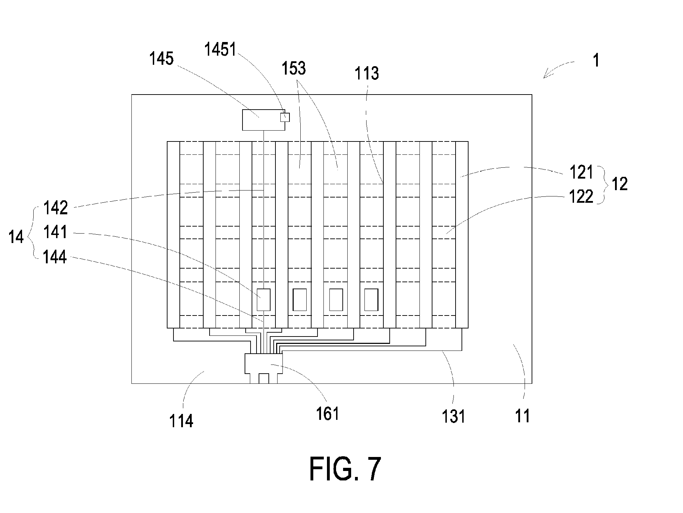

FIG. 7 is a plane view showing a touch module with a transparent antenna according to a sixth preferred embodiment of the present invention. As shown in FIG 7, the structures of the touch module 1 are similar to those of the touch module as shown in FIGS. 4A to 4C, and are not redundantly described herein. Component parts and elements corresponding to those of the FIGS. 4A to 4C are designated by identical numeral references, and detailed descriptions thereof are omitted. Comparing with the touch module 1 of FIGS.4A to 4C, the antenna 14 of FIG. 7 comprises at least an (one) antenna radiator 141 disposed on the top surface of the transparent substrate 11 and located in the viewable area 113, and an additional antenna radiator 145 disposed on the top surface of the transparent substrate 11 and located in the peripheral area 114. In this embodiment, the antenna radiator 141 is located in the overlapping dummy area 153. The antenna 14 further comprises a first connecting trace 142 electrically connected between the antenna radiator 141 and the additional antenna radiator 145. The additional antenna radiator 145 further comprises a feeder part 1451, and the first connecting trace 142 is capable of transmitting and receiving wireless signals via the feeder part 1451. The antenna 14 further comprises a second connecting trace 144 connected between the antenna radiator 141 and ground of the first connecting area 161 located in the peripheral area 114. In this embodiment, the antenna radiator 141, the first connecting trace 142 and the second connecting trace 144 of the antenna 14, the first metal traces 131, the first sensing electrodes 121 of the metal mesh touch sensor 12, and the additional antenna radiator 145 are one-step formed by the same manufacturing process on the same surface, i.e. the top surface of the transparent substrate 11. Alternatively, the antenna radiator 141, the first connecting trace 142 and the second connecting trace 144 of the antenna 14, and the additional antenna 145 are capable of being disposed on the bottom surface of the transparent substrate 11.

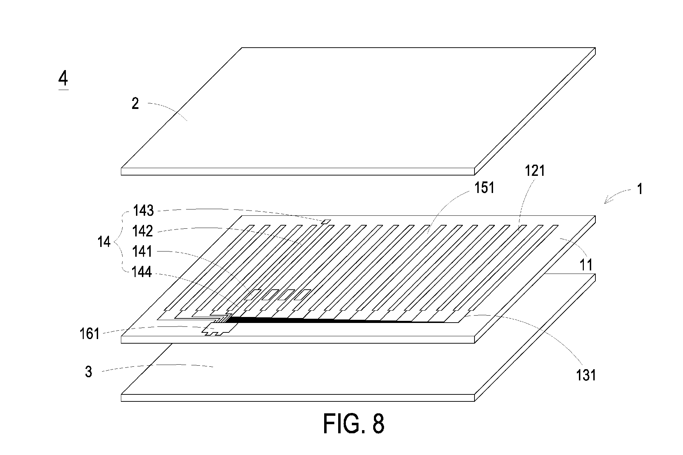

FIG. 8 illustrates a touch display apparatus according to the present invention. The touch display apparatus of the present invention can be employed in electronic devices with wireless communicating functionality, such as but not limited to mobile phones, tablet PCs, portable computers, wearable devices or displays, so as to provide functions of displaying images, touching control, and transmitting and receiving wireless signals. As shown in FIG. 8, the touch display apparatus 4 includes a cover glass 2, a display module 3, and a touch module 1. The structures of the touch module 1 are similar to those of the touch module as shown in FIGS. 4A to 4C, and are not redundantly described herein. Component parts and elements corresponding to those of the FIGS. 4A to 4C are designated by identical numeral references, and detailed descriptions thereof are omitted. The touch module 1 is disposed between the cover glass 2 and the display module 3. In some embodiments, the display module 3 is but not limited to a liquid crystal panel, an organic light-emitting diode display panel or electronic ink display panel. Alternatively, the other varied demonstrations of FIGS. 1A to 1C, FIGS. 3A to 3C FIGS. 5A to 5C, FIGS. 6A to 6C, and FIG. 7 are considerable to be employed.

In summary, the present invention provides a touch module with an antenna. The touch module is applicable to electronic device having wireless communicating functionality, without introducing an additional antenna element, so as to decrease the manufacturing steps and the raw materials cost, avoid the signal interference, and accomplish the functionalities of touch module and antenna. The touch module with an antenna and the touch display apparatus are capable of increasing the touch sensitivity, improving a phenomenon of resistance capacitance delay and achieving high optical quality. In addition, the structure is lightweight and compact, the manufacturing process is simplified, and the entire thickness is reduced. Furthermore, the present invention provides the touch module with antenna and the touch display apparatus, wherein the antenna radiator is disposed on a dummy area within the viewable area of the metal mesh touch module and formed in the same manufacturing step of forming the metal mesh touch sensor disposed on the viewable area and the metal traces disposed on the peripheral area, so as to obtain an uniform thickness. The antenna is integrated and located in the viewable area, so that the entire size of the touch module is not influenced and the signal interference is not caused.

## Claims

1. A touch module (1) comprising:
a transparent substrate (11);
a metal mesh touch sensor (12) disposed on at least one surface of the transparent substrate (11) and configured to form a viewable area (113), wherein the viewable area (113) comprises at least an overlapping dummy area (153) free of a vertical projection of the metal mesh touch sensor (12); and
an antenna (14) disposed on the at least one surface of the transparent substrate (11), and at least a portion of the antenna (14) being located in the overlapping dummy area (153), wherein the antenna (14) and the metal mesh touch sensor (12) are insulated from each other.

2. The touch module according to claim 1, wherein the touch module (1) further comprises a plurality of metal traces (131, 132) disposed on the at least one surface of the transparent substrate (11), configured to form a peripheral area (114) around the viewable area (113), and electrically connected with the metal mesh touch sensor (12) and a connecting area (161, 162).

3. The touch module according to claim 2, wherein the antenna (14) and the metal mesh touch sensor (12) and the metal traces (131, 132) are disposed on the same surface and formed simultaneously in one step.

4. The touch module according to any of the preceding claims, wherein the transparent substrate (11) comprises a first transparent membrane (111) and a second transparent membrane (112), and the metal mesh touch sensor (12) comprises:
a plurality of first sensing electrodes (121) disposed on a top surface or a bottom surface of the first transparent membrane (111); and
a plurality of second sensing electrodes (122) disposed on a top surface or a bottom surface of the second transparent membrane (112),
wherein the first transparent membrane (111) comprises a first dummy area (151) free of a vertical projection of the first sensing electrodes (121), the second transparent membrane (112) comprises a second dummy area (152) free of a vertical projection of the second sensing electrodes (122), and the first dummy area (151) and the second dummy area (152) are configured to define the overlapping dummy area (153).

5. The touch module according to claim 4, wherein the antenna (14) comprises:
at least an antenna radiator (141) disposed on the top surface or the bottom surface of the first transparent membrane (111) and located in the overlapping dummy area (153);
a feeder pad (143) disposed on the top surface or the bottom surface of the first transparent membrane (111) and located in the peripheral area (114);
a first connecting trace (142) disposed on the top surface or the bottom surface of the first transparent membrane (111) and connected between the antenna radiator (141) and the feeder pad (143); and
a second connecting trace (144) disposed on the top surface or the bottom surface of the first transparent membrane (111) and connected between the antenna radiator (141) and a ground of the connecting area (161).

6. The touch module according to claim 4, wherein the antenna (14) is a coupling-feed antenna and comprises:
a first antenna radiator (1411) disposed on the top surface or the bottom surface of the first transparent membrane (111) and located in the overlapping dummy area (153);
a feeder pad (143) disposed on the top surface or the bottom surface of the first transparent membrane (111) and located in the peripheral area (114);
a first connecting trace (142) disposed on the top surface or the bottom surface of the first transparent membrane (111) and connected between the first antenna radiator (1411) and the feeder pad (143);
a second antenna radiator (1412) disposed on the bottom surface of the second transparent membrane (112), located in the overlapping dummy area (153) and signal coupling with the first antenna radiator (1411); and
a second connecting trace (144) disposed on the bottom surface of the second transparent membrane (112) and connected between the second antenna radiator (1412) and a ground of the connecting area (162).

7. The touch module according to claim 5 or 6, wherein the antenna (14) further comprises an additional antenna radiator (145) disposed on the top surface or the bottom surface of the first transparent membrane (111) and located in the peripheral area (113), wherein the additional antenna radiator (145) is connected with the first connecting trace (142) and comprises a feeder part (1451).

8. The touch module according to claim 4, wherein the connecting area (161, 162) comprises a first connecting area (161) and a second connecting area (162) disposed on the first transparent membrane (111) and the second transparent membrane (112) respectively, and the antenna (14) is a coupling-feed antenna and comprises:
a first antenna radiator (1411) disposed on the top surface or the bottom surface of the first transparent membrane (111) and located in the overlapping dummy area (153);
a first connecting trace (142) disposed on the top surface or the bottom surface of the first transparent membrane (111) and connected between the first antenna radiator (1411) and the first connecting area (161);
a second antenna radiator (1412) disposed on the bottom surface of the second transparent membrane (112), located in the overlapping dummy area (153) and signal coupling with the first antenna radiator (1411); and
a second connecting trace (144) disposed on the bottom surface of the second transparent membrane (112) and connected between the second antenna radiator (1412) and a ground of the second connecting area (162).

9. The touch module according to claim 2, wherein the transparent substrate (11) has a first surface (S1) and a second surface (S2), the metal mesh touch sensor (12) comprises a plurality of first sensing electrodes (121) disposed on the first surface (S1) of the transparent substrate (11) and a plurality of second sensing electrodes (122) disposed on the second surface (S2) of the transparent substrate (11), and the first sensing electrodes (121) and the second sensing electrodes (122) are configured to form a cross arrangement and insulated from each other, wherein any two first sensing electrodes (121) are configured to form a first dummy area (151) on the first surface (S1), any two second sensing electrodes (122) are configured to form a second dummy area (152) on the second surface (S2), and the first dummy area (151) and the second dummy area (152) are configured to define the overlapping dummy area (153).

10. The touch module according to claim 9, wherein the antenna (14) comprises:
at least an antenna radiator (141) disposed on the first surface (S1) of the transparent substrate (11) and located in the overlapping dummy area (153);
a feeder pad (143) disposed on the first surface (S1) of the transparent substrate (11) and located in the peripheral area (114);
a first connecting trace (142) disposed on the first surface (S1) of the transparent substrate (11) and connected between the antenna radiator (141) and the feeder pad (143); and
a second connecting trace (144) disposed on the first surface (S1) of the transparent substrate (11) and connected between the antenna radiator (141) and a ground of the connecting area (161).

11. The touch module according to claim 9, wherein the antenna (14) is a coupling-feed antenna and comprises:
a first antenna radiator (1411) disposed on the first surface (S1) of the transparent substrate (11) and located in the overlapping dummy area (153);
a feeder pad (143) disposed on the first surface (S1) of the transparent substrate (11) and located in the peripheral area (114);
a first connecting trace (142) disposed on the first surface (S1) of the transparent substrate (11) and connected between the first antenna radiator (1411) and the feeder pad (143); and
a second antenna radiator (1412) disposed on the second surface (S2) of the transparent substrate (11), located in the overlapping dummy area (153) and signal coupling with the first antenna radiator (1411); and
a second connecting trace (144) disposed on the second surface (S2) of the transparent substrate (11) and connected between the second antenna radiator (1412) and a ground of the connecting area (162).

12. The touch module according to any claim 10 or 11, wherein the antenna (14) further comprises an additional antenna radiator (145) disposed on the first surface (S1) of the transparent substrate (11) and located in the peripheral area (114), wherein the additional antenna radiator (145) is connected with the first connecting trace (142) and comprises a feeder part (1451).

13. The touch module according to claim 9, wherein the connecting area (161, 162) comprises a first connecting area (161) and a second connecting area (162) disposed on the first surface (S1) and the second surface (S2) respectively, and the antenna (14) is a coupling-feed antenna and comprises:
a first antenna radiator (1411) disposed on the first surface (S1) of the transparent substrate (11) and located in the overlapping dummy area (153);
a first connecting trace (142) disposed on the first surface (S1) of the transparent substrate (11) and connected between the first antenna radiator (1411) and the first connecting area (161);
a second antenna radiator (1412) disposed on the second surface (S2) of the transparent substrate (11), located in the overlapping dummy area (153) and signal coupling with the first antenna radiator (1411); and
a second connecting trace (144) disposed on the second surface (S2) of the transparent substrate (11) and connected between the second antenna radiator (1412) and a ground of the second connecting area (162).

14. A touch display apparatus (4) comprising:
a cover glass (2);
a display module (3); and
a touch module (1), preferably a touch module (1) according to any of claims 1 to 13, said touch module (1) being disposed between the cover glass (2) and the display module (3) and comprising:
a transparent substrate (11);
a metal mesh touch sensor (12) disposed on at least one surface of the transparent substrate (11) and configured to form a viewable area (113), wherein the viewable area (113) comprises at least an overlapping dummy area (153) free of a vertical projection of the metal mesh touch sensor (12); and
an antenna (14) disposed on the at least one surface of the transparent substrate (11), and located in the overlapping dummy area (153), wherein the antenna (14) and the metal mesh touch sensor (12) are insulated from each other.

15. The touch display apparatus according to claim 14, wherein the antenna (14) is a coupling-feed antenna.
